# EUROPEAN PATENT SPECIFICATION

(11) **EP 2 320 733 B1**
(45) Date of publication and mention of the grant of the patent: **30.09.2015**
(21) Application number: 09788041.3
(22) Date of filing: 19.08.2009
(51) Int. Cl.: A01N 43/50, A01N 25/22

(54) **METHOD FOR CONTROLLING DEGRADATION OF AGRICULTURAL CHEMICAL ACTIVE INGREDIENT**
VERFAHREN ZUR KONTROLLE DES ABBAUS VON LANDWIRTSCHAFTLICHEN CHEMISCHEN WIRKSTOFFEN
PROCÉDÉ DE LUTTE CONTRE LA DÉGRADATION D'INGRÉDIENTS ACTIFS CHIMIQUES AGRICOLES

(30) Priority: 19.08.2008 JP 2008211054
(43) Date of publication of application: 18.05.2011
(73) Proprietor: ISHIHARA SANGYO KAISHA, LTD., Osaka-shi Osaka 550-0002 (JP)
(72) Inventor: SHINDO, Takeshi, Shiga 525-0025 (JP); OHNO, Hiromi, Shiga 525-0025 (JP); ISHIBASHI, Yutaka, Shiga 525-0025 (JP)
(74) Representative: Hoffmann Eitle
(86) International application number: PCT/JP2009/064811
(87) International publication number: WO 2010/021404

(56) References cited:
- WO-A1-2005/048707
- WO-A1-2007/050090
- CN-A- 101 578 987
- CN-A- 101 690 484
- US-A- 5 650 161
- DATABASE WPI Week 198841 Thomson Scientific, London, GB; AN 1988-289027 XP002613047, & JP 63 211203 A (NIHON TOKUSHU NOYAKU SEIZO KK) 2 September 1988 (1988-09-02)

## Description

### Technical Field

This invention relates to the use of a specific stabilizer for controlling degradation of an agricultural chemical active ingredient, Cyazofamid.

### Background Art

EP-A-0 298 196 discloses an imidazole compound including Cyazofamid as an active ingredient in a composition for controlling harmful bio-organisms. WO 98/48628 discloses an activity-enhanced composition for controlling harmful bio-organisms comprising an imidazole compound including Cyazofamid and an activity enhancing ingredient, such as surface active agents, mineral oil and animal and/or vegetable oil. In addition, EP-A-0 298 196 and WO 98/48628 both disclose that the active ingredient can be formulated into various forms by blending various additive agents, such as an antifoaming agent, a stabilizer, a dispersing agent and a thickening agent. However, there is no description in these literatures about a method for controlling degradation of the agricultural chemical active ingredient, Cyazofamid, which comprises using at least one stabilizer selected from the group consisting of epoxidized animal and/or vegetable oil, a nonionic surface active agent of polyoxyethylene, an anionic surface active agent of polyoxyethylene, polyhydric alcohol and a basic substance.

JP-A-63-211203 discloses stabilized compositions containing mixed active agricultural chemical components, which comprise a mixture composed of 1-(4-chlorobenzyl)-1-cyclopentyl-3-phenylurea useful as a horticultural fungicide and an organophosphorus compound such as O-ethyl-S,S-diphenyl phosphorodithioate useful as insecticide or fungicide, stabilized by the addition of anhydrous magnesium sulfate as a stabilizer, optionally in combination with an epoxidized linseed oil and/or an epoxidized soybean oil.

### Summary of Invention

### Technical Problem

When Cyazofamid is formulated in accordance with a conventional formulation method, Cyazofamid is degraded in some cases. The problem to be solved by the present invention is to improve storage stability of the formulations by controlling degradation of Cyazofamid as an agricultural chemical active ingredient.

### Solution to Problem

As a result of investigations in order to solve the aforementioned problems, the present inventors have conducted studies and found that degradation of Cyazofamid as an agricultural chemical active ingredient can be controlled and its storage stability can therefore be improved when at least one specified stabilizer is blended in an agricultural chemical composition.

That is, the present invention relates to the use of at least one stabilizer selected from epoxidized animal oil; epoxidized vegetable oil; a nonionic or anionic polyoxyethylene surfactant; a polyhydric alcohol; hydroxides, carbonates and bicarbonates of alkali metals; hydroxides, carbonates and bicarbonates of alkaline earth metals; aqueous silicate solutions; basic silicates; and alkaline earth metal basic silicate, for controlling degradation of Cyazofamid.

### Advantageous Effects of Invention

According to the invention, the storage stability of an agricultural chemical composition comprising an agricultural chemical active ingredient, Cyazofamid, can be improved, and an agricultural composition in which Cyazofamid is chemically stabilized can be provided.

### Description of Embodiments

Cyazofamid is a common name and its chemical name is 4-chloro-2-cyano-1-dimethylsulfamoyl-5-(4-methylphenyl) imidazole.

The epoxidized animal oil and/or epoxidized vegetable oil to be used in the present invention as a stabilizer is a compound in which unsaturated bond moiety of fatty acids of animal oil and/or vegetable oil is epoxidized. Examples of the animal oil and/or vegetable oil herein includes vegetable oil, such as soybean oil, cotton seed oil, palm oil, linseed oil, rape seed oil, olive oil, corn oil, coconut oil and safflower oil; and animal oil, such as, beef tallow, lard and fish oil. Specific examples of the epoxidized animal and/or epoxidized vegetable oil include epoxidized soybean oil (ESO) and epoxidized linseed oil (ELO).

Examples of the nonionic surface active agent of polyoxyethylene to be used as a stabilizer in the present invention include polyoxyethylene alkyl ether, such as polyoxyethylene decyl ether, polyoxyethylene lauryl ether, polyoxyethylene cetyl ether, polyoxyethylene stearyl ether, polyoxyethylene oleyl ether, polyoxyethylene isodecyl ether, polyoxyethylene tridecyl ether, polyoxyethylene isostearyl ether, polyoxyethylene C₁₂₋₁₄ alkyl ether and polyoxyethylene C₂₀₋₄₀ alkyl ether; polyoxyethylene fatty acid ester, such as polyoxyethylene oleate ester, polyethylene glycol monolaurate, polyethylene glycol monostearate, polyethylene glycol monooleate and polyethylene glycol distearate; and polyoxyethylene castor oil.

Examples of the anionic surface active agent of polyoxyethylene to be used as a stabilizer in the present invention include a salt of polyoxyethylene alkyl ether sulfuric acid ester, such as sodium polyoxyethylene lauryl ether sulfate, an ammonium salt of polyoxyethylene lauryl ether sulfuric acid ester, sodium polyoxyethylene alkyl ether sulfate and polyoxyethylene alkyl ether triethanolamine sulfate; polyoxyethylene alkylaryl ether sulfate; polyoxyethylene styryl ether sulfate; polyoxyethylene styryl ether ammonium sulfate; polyoxyethylene alkyl ether phosphate; a salt of polyoxyethylene alkylaryl ether phosphoric acid ester; polyoxyethylene styrylaryl ether phosphoric acid ester; and a salt of polyoxyethylene styrylaryl ether phosphoric acid ester.

Examples of the polyhydric alcohol to be used in the present invention as a stabilizer include alcohols in which two or more of hydrogen atoms in the hydrocarbon moiety are substituted with hydroxyl groups. Specific examples include alkylene glycol (dihydric alcohol), such as ethylene glycol and propylene glycol; trihydric alcohol, such as glycerin; dialkylene glycol, such as diethylene glycol and dipropylene glycol; polyalkylene glycol, such as polyethylene glycol and polypropylene glycol.

Examples of hydroxides, carbonates and bicarbonates of alkali metals to be used in the present invention as a stabilizer include sodium hydroxide, potassium hydroxide, sodium carbonate, potassium carbonate, sodium bicarbonate and potassium bicarbonate.

Examples of hydroxides, carbonates and bicarbonates of alkaline earth metals to be used in the present invention as a stabilizer include calcium hydroxide, magnesium hydroxide, calcium carbonate, magnesium carbonate, calcium bicarbonate and magnesium bicarbonates.

Examples of aqueous silicate solutions and basic silicates to be used in the present invention as a stabilizer include water glasses and sodium silicate, respectively.

According to the present invention, Cyazofamid and a stabilizer are usually used at a weight ratio of from 1:100 to 100:1, preferably from 1:10 to 10:1.

According to the present invention, for example, an agricultural chemical active ingredient, Cyazofamid, and the aforementioned stabilizer can be formulated into various formulation forms, for example, a solid formulation, such as a dustable powder, a granule, a wettable powder, a water dispersible granule, a water soluble powder, a water soluble granule and a tablet; an emulsifiable concentrate; a soluble concentrate; a suspension concentrate; concentrated emulsion; suspoemulsion; microemulsion; and emulsifiable gel, together with various additive agents for agricultural chemical formulations, and the agricultural chemical composition comprising Cyazofamid and a stabilizer (hereinafter referred to as agricultural chemical composition) formulated in this manner has considerably improved periodical stability of Cyazofamid. As the agricultural chemical composition of the present invention, a solid formulation is preferable. Among the solid formulations, a wettable powder, a water dispersible granule and a dustable powder are preferable.

The agricultural chemical composition of the use of the present invention comprises for example, an agricultural chemical active ingredient, a stabilizer and a carrier, and can be formulated by mixing them. Examples of the carrier include solid carriers and fluid carriers. Examples of the solid carriers include animal and vegetable powders, such as starch, sugar, cellulose powders, cyclodextrin, activated charcoal, soybean powders, wheat powders, chaff powders, wood powders, fish powders and powdery milk; and mineral powders, such as clay, talc, kaolin, bentonite, organic bentonite, calcium sulfate, zeolite, diatomaceous earth, white carbon, alumina, silica and sulfur powder. Examples of the fluid carriers include water; alcohols, such as ethyl alcohol and ethylene glycol; ketones, such as acetone and methyl ethyl ketone; ethers, such as dioxane and tetrahydrofran; aliphatic hydrocarbons, such as kerosene and lamp oil; aromatic hydrocarbons, such as toluene, xylene, trimethylbenzene, tetramethylbenzene, cyclohexane and solvent naphtha; halogenated hydrocarbons, such as chloroform and chlorobenzene; acid amides, such as dimethylformamide; esters, such as acetic acid ethyl ester and fatty acid glycerin ester; nitriles, such as acetonitrile; sulfur-containing compounds , such as dimethylsulfoxide; N-methyl-2-pyrrolidone; and N,N-dimethylformamide. The carrier can be used by optionally selecting an appropriate substance depending on the formulation form. In this connection, when a basic substance is used as the stabilizer, it can also function as a carrier. Particularly, calcium carbonate is useful since it functions as both of a stabilizer and a carrier. Furthermore, in addition to the carrier, formulation adjuvants, such as an emulsifying agent, a suspension agent, a thickening agent, a dispersing agent, a wetting agent, an antifreezing agent and an antifoaming agent, can also be added to the agricultural chemical composition, if necessary.

Examples of the dispersing agent which can be used include an anionic surface active agent, such as naphthalene sulfonate, a salt of naphthalene sulfonic acid-formaldehyde condensate, alkylnaphthalene sulfonate, a salt of alkylnaphthalene sulfonic acid-formaldehyde condensate, phenol sulfonate, a salt of phenolsulfonic aid-formaldehyde condensate, lignin sulfonate and polycarboxylate; and a nonionic surface active agent, such as oxyalkylene block polymer. In this connection, when a nonionic surface active agent of polyoxyethylene or an anionic surface active agent of polyoxyethylene is used as the stabilizer, it can also function as a dispersing agent. Examples of the wetting agent which can be used include dialkylnaphthalene sulfonate, an organic silicone wetting agent, alkyl phthalate, and ethoxylated alkylamine. In this connection, when a nonionic surface active agent of polyoxyethylene, an anionic surface active agent of polyoxyethylene or polyhydric alcohol is used as the stabilizer, it can also function as a wetting agent.

The Cyazofamid content as an agricultural chemical active ingredient in the agricultural chemical composition is usually 0.1-70 wt.-%, preferably 0.1-50 wt.-%, based on the total weight of the composition. The stabilizer content is usually 0.05-20 wt.-%, preferably 0.1-5 wt.-%, based on the total weight of the composition. The carrier content is usually 10-99.85 wt.-%, preferably 45-99.8 wt.-%, based on the total weight of the composition.

When a basic substance which can also function as a carrier is used as the stabilizer, regarding the content of each component in the agricultural chemical composition, the amount of the agricultural chemical active ingredient, Cyazofamid, can be set to usually 0.1-70 wt.-%, preferably 0.1-50 wt.-%, based on the total weight of the composition, and the amount of the basic substance which doubles both as a stabilizer and a carrier to usually 30-99.9 wt.-%, preferably 50-99.9 wt.-%, based on the total weight of the composition.

In addition, when a dispersing agent or wetting agent is added to the agricultural chemical composition, the dispersing agent content is usually 0.5-20 wt.-%, preferably 1-15 wt.-%, and the wetting agent content is usually 0.5-10 wt.-%, preferably 1-5 wt.-%, based on the total weight of the composition.

In addition to Cyazofamid, further one or more conventionally known other agricultural chemical active ingredient compounds, such as a fungicide, an insecticide, a mitecide, a nematocide, a soil insect pesticide, an antivirus agent, an attractant, a herbicide or a plant growth regulating agent, can also be blended and used in the agricultural chemical composition. In that case, it may show further superior effect. Among these other agricultural chemical active ingredient compounds, it is preferably combined with an active ingredient compound of fungicide. These other agricultural chemical active ingredient compounds can be used alone or as a mixture of two or more. When other agricultural chemical active ingredient compounds are blended in addition to Cyazofamid, the content of the other agricultural chemical active ingredient compounds is usually 0.01-69.9 wt.-%, preferably 0.1-30 wt.-%, based on the total weight of the composition.

The active ingredient compounds of the fungicide in the above-mentioned other agricultural chemicals include, for example, (by common names, some of them are still in an application stage, or test codes of Japan Plant Protection Association) anilinopyrimidine compounds such as mepanipyrim, pyrimethanil, cyprodinil and ferimzone; a triazoropyrimidine compound such as 5-chloro-6-(2,4,6-trifluorophenyl)-7-(4-methylpiperidin-1-yl) [1,2,4]triazolo[1,5-a]pyrimidine; pyridinamine compounds such as fluazinam; azole compounds such as triadimefon, bitertanol, triflumizole, etaconazole, propiconazole, penconazole, flusilazole, myclobutanil, cyproconazole, tebuconazole, hexaconazole, furconazole-cis, prochloraz, metconazole, epoxiconazole, tetraconazole, oxpoconazole fumarate, sipconazole, prothioconazole, triadimenol, flutriafol, difenoconazole, fluquinconazole, fenbuconazole, bromuconazole, diniconazole, tricyclazole, probenazole, simeconazole, pefurazoate, ipconazole and imibenconazole; quinoxaline compounds such as quinomethionate; dithiocarbamate compounds such as maneb, zineb, mancozeb, polycarbamate, metiram, propineb and thiram; organic chlorine compounds such as fthalide, chlorothalonil and quintozene, imidazole compounds such as benomyl, thiophanate-methyl, carbendazim, thiabendazole and fuberiazole ; cyanoacetamide compounds such as cymoxanil; phenylamide compounds such as metalaxyl, metalaxyl-M, mefenoxam, oxadixyl, ofurace, benalaxyl, benalaxyl-M (another name: kiralaxyl, chiralaxyl), furalaxyl and cyprofuram; sulfenic acid compounds such as dichlofluanid; copper compounds such as cupric hydroxide and oxine copper; isoxazole compounds such as hymexazol; organophosphorus compounds such as fosetyl-Al, tolclofos-methyl, S-benzyl O,O-diisopropylphosphorothioate, O-ethyl S,S-diphenylphosphorodithioate, aluminum ethylhydrogen phosphonate, edifenphos, iprobenfos; N-halogenothioalkyl compounds such as captan, captafol and folpet; dicarboximide compounds such as procymidone, iprodione and vinclozolin; benzanilide compounds such as flutolanil, mepronil, zoxamid and tiadinil; anilide compounds such as carboxin, oxycarboxin, thifluzamide, penthiopyrad, boscalid, bixafen, fluopyram, isotianil and mixture of 2 *syn*-isomers 3-(difluoromethyl)-1-methyl-N[(1RS,4SR,9SR)-1,2,3,4-tetrahydro-9-isopropyl-1,4-methanonaphthalen-5-yl]pyrazole-4-carboxamide and 2 *anti*-isomers 3-(difluoromethyl)-1-methyl-N-[(1RS,4SR,9SR)-1,2,3,4-tetrahydro-9-isopropyl-1,4-methanonaphthalen-5-yl]pyrazole-4-carboxamide (isopyrazam); piperazine compounds such as triforine; pyridine compounds such as pyrifenox; carbinol compounds such as fenarimol and flutriafol; piperidine compounds such as fenpropidine, morpholine compounds such as fenpropimorph, spiroxamine and tridemorph; organotin compounds such as fentin hydroxide and fentin acetate; urea compounds such as pencycuron; cinnamic acid compounds such as dimethomorph and flumorph; phenylcarbamate compounds such as diethofencarb; cyanopyrrole compounds such as fludioxonil and fenpiclonil; strobilurin compounds such as azoxystrobin, kresoxim-methyl, metominofen, trifloxystrobin, picoxystrobin, oryzastrobin, dimoxystrobin, pyraclostrobin, and fluoxastrobin; oxazolidinone compounds such as famoxadone; thiazolecarboxamide compounds such as ethaboxam; silylamide compounds such as silthiopham; aminoacid amidecarbamate compounds such as iprovalicarb, benthiavalicarb-isopropyl, and methyl[S,(R,S)]-[(3-(N-isopopoxycarbonylvalinyl)-amino]-3-(4-chloro-phenyl)propaonate (valiphenal); imidazolidine compounds such as fenamidone; hydroxanilide compounds such as fenhexamid; benzenesulfonamide compounds such as flusulfamide; oxime ether compounds such as cyflufenamid; phenoxyamide compounds such as fenoxanil; anthraquinone compounds;crotonic compounds; antibiotics such as validamycin, kasugamycin and polyoxins; guanidine compounds such as iminoctadine and dodine; 4-quinolionol derivative compounds such as 2,3-dimethyl-6-t-butyl-8-fluoro-4-acetylquinoline; cyanomethylene componds such as 2-(2-fluoro-5-(trifluromethyl)phenylthio)-2-(3-(2-methoxyphenyl)thiazolidin-2-yliden)acetonitrile; and other compounds such as pyribencarb, isoprothiolane, Pyroquilon, diclomezine, quinoxyfen, propamocarb hydrochloride, chloropicrin, dazomet, metam-sodium, nicobifen, metrafenone, UBF-307, diclocymet, proquinazid, amisulbrom (another name: amibromdole), mandipropamid, fluopicolide, carpropamid, meptyldinocap, 6-t-butyl-8-fluoro-2,3-dimethylquinolin-4-yl acetate, BCF051, BCM061 and BCM062.

The active ingredient compounds of insect pest control agents, such as insecticides, miticides, nematicides or soil pesticides in the above-mentioned other agricultural chemicals, include, for example, (by common names, some of them are still in an application stage, or test codes of Japan Plant Protection Association) organic phosphate compounds such as profenofos, dichlorvos, fenamiphos, fenitrothion, EPN, diazinon, chlorpyrifos, chlorpyrifos-methyl, acephate, prothiofos, fosthiazate, cadusafos, dislufoton, isoxathion, isofenphos, ethion, etrimfos, quinalphos, dimethylvinphos, dimethoate, sulprofos, thiometon, vamidothion, pyraclofos, pyridaphenthion, pirimiphos-methyl, propaphos, phosalone, formothion, malathion, tetrachlovinphos, chlorfenvinphos, cyanophos, trichlorfon, methidathion, phenthoate, ESP, azinphos-methyl, fenthion, heptenophos, methoxychlor, paration, phosphocarb, demeton-S-methyl, monocrotophos, methamidophos, imicyafos, parathion-methyl, terbufos, phospamidon, phosmet and phorate; carbamate compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC and fenothiocarb; nereistoxin derivatives such as cartap, thiocyclam, bensultap and thiosultap-sodium; organic chlorine compounds such as dicofol, tetradifon, endosulufan, dienochlor and dieldrin; organic metal compounds such as fenbutatin oxide and cyhexatin; pyrethroid compounds such as fenvalerate, permethrin, cypermethrin, deltamethrin, cyhalothrin, tefluthrin, ethofenprox, flufenprox, cyfluthrin, fenpropathrin, flucythrinate, fluvalinate, cycloprothrin, lambda-cyhalothrin, pyrethrins, esfenvalerate, tetramethrin, resmethrin, protrifenbute, bifenthrin, zeta-cypermethrin, acrinathrin, alpha-cypermethrin, allethrin, gamma-cyhalothrin, theta-cypermethrin, tau-fluvalinate, tralomethrin, profluthrin, beta-cypermethrin, beta-cyfluthrin, metofluthrin, phenothrin, imidate and flumethrin; benzoylurea compounds such as diflubenzuron, chlorfluazuron, teflubenzuron, flufenoxuron, lufenuron, novaluron, triflumuron, hexaflumuron, bistrifluron, noviflumuron, and fluazuron; juvenile hormone-like compounds such as methoprene, pyriproxyfen, fenoxycarb and diofenolan; pyridazinone compounds such as pridaben; pyrazole compounds such as fenpyroximate, fipronil, tebufenpyrad, ethiprole, tolfenpyrad, acetoprole, pyrafluprole and pyriprole; neonicotinoids such as imidacloprid, nitenpyram, acetamiprid, thiacloprid, thiamethoxam, clothianidin, nidinotefuran, and dinotefuran; hydrazine compounds such as tebufenozide, methoxyfenozide, chromafenozide and halofenozide; pyridine compounds such as pyridaryl and flonicamid; tetronic acid compounds such as spirodiclofen; strobilurin compounds such as fluacrypyrim; pyridinamine compounds such as flufenerim; dinitro compounds; organic sulfur compounds; urea compounds; triazine compounds; hydrazone compounds; and other compounds such as buprofezin, hexythiazox, amitraz, chlordimeform, silafluofen, triazamate, pymetrozine, pyrimidifen, chlorfenapyr, indoxacarb, acequinocyl, etoxazole, cyromazine, 1,3-dichloropropene, diafenthiuron, benclothiaz, bifenazate, spiromesifen, spirotetramat, propargite, clofentezine, metaflumizone, flubendiamide, cyflumetofen, chlorantraniliprole, cyenopyrafen, pyrifluquinazon, fenazaquin, pyridaben, amidoflumet, chlorobenzoate, sulfluramid, hydramethylnon, metaldehyde, HGW 86, ryanodine, flufenrim, pyridalyl, spirodiclofen, verbutin, thiazolylcinnanonitrile, AKD-1022, and IKA-2000. Further, it may be used in combination with or together with microbial agricultural chemicals such as Bacillus thuringienses aizawai, Bacillus thuringienses kurstaki, Bacillus thuringienses israelensis, Bacillus thuringienses japonensis, Bacillus thuringienses tenebrionis, insecticidal crystal protein produced by Bacillus thuringienses, insect viruses, etomopathogenic fungi, and nematophagous fungi; antibiotics or semisynthetic antibiotics such as avermectin, emamectin-benzoate, milbemectin, milbemycin, spinosad, ivermectin, lepimectin, DE-175, abamectin, emamectin and spinetoram; natural products such as azadirachtin and rotenone; and repellents such as deet. It is further preferably used in combination with or together with benzanilide compound or an antibiotic among these active ingredient compounds of the fungicide.

When the agricultural chemical composition is a dustable powder or wettable powder, it is produced, for example, in the following manner. An agricultural chemical composition is produced by pulverizing a mixture of Cyazofamid, if necessary, with other agricultural chemical active ingredient, or a product of this further blended with e.g. a small amount of a carrier, using a mixing mill for foods such as Millser (trade name, manufactured by Iwatani Corporation), a hammer mill, a pin mill, a jet mill, or a centrifugal mill, adding a carrier for obtaining a dustable powder or wettable powder and other ingredients, if necessary, and blending them using e.g. a Ribbon Mixer or a V-shape Mixer, followed by further thoroughly blending them using, for example, an impact crusher, if necessary. When the agricultural chemical composition is a water dispersible granule, it is produced by an extruding granulation method, a spray drying granulation method, and a fluidized bed granulation method.

As mentioned already, the invention is directed to
(1) The use of at least one stabilizer selected from epoxidized animal oil; epoxidized vegetable oil; a nonionic or anionic polyoxyethylene surfactant; a polyhydric alcohol; hydroxides, carbonates and bicarbonates of alkali metals; hydroxides, carbonates and bicarbonates of alkaline earth metals; aqueous silicate solutions; basic silicates; and alkaline earth metal basic silicate, for controlling degradation of Cyazofamid.
   Preferred embodiments of this use are as follows.
(2) The use described in (1), wherein the degradation of the agricultural chemical active ingredient, Cyazofamid, is controlled in a solid formulation.
(3) The use described in (2), wherein the solid formulation is a wettable powder, a water dispersible granule or a dustable powder; and preferably a dustable powder.
(4) The use described in (1), wherein Cyazofamid and a stabilizer are used at a weight ratio of from 1:100 to 100:1.
(5) The use described in (1), wherein the stabilizer is epoxidized animal oil and/or epoxidized vegetable oil.
(6) The use described in (5), wherein the epoxidized animal oil and/or epoxidized vegetable oil is epoxidized soybean oil and/or epoxidized linseed oil.
(7) The use described in (1), wherein the nonionic surface active agent of polyoxyethylene is at least one selected from t polyoxyethylene alkyl ether, polyoxyethylene fatty acid ester and polyoxyethylene castor oil.
(8) The use described in (1), wherein the nonionic surface active agent of polyoxyethylene is at least one selected from polyoxyethylene alkyl ether and polyoxyethylene fatty acid ester.
(9) The use described in (1), wherein the nonionic surface active agent of polyoxyethylene is at least one selected from polyoxyethylene lauryl ether and polyoxyethylene oleate ester.
(10) The use described in (1), wherein the anionic surface active agent of polyoxyethylene is at least one of a salt of polyoxyethylene alkyl ether sulfuric acid ester, polyoxyethylene alkylaryl ether sulfate, polyoxyethylene styryl ether sulfate, polyoxyethylene styryl ether ammonium sulfate, polyoxyethylene alkyl ether phosphate, a salt of polyoxyethylene alkylaryl ether phosphoric acid ester, polyoxyethylene styrylaryl ether phosphoric acid ester and a salt of polyoxyethylene styrylaryl ether phosphoric acid ester.
(11) The use described in (10), wherein the anionic surface active agent of polyoxyethylene is a salt of polyoxyethylene alkyl ether sulfuric acid ester.
(12) The use described in (11), wherein the salt of polyoxyethylene alkyl ether sulfuric acid ester is an ammonium salt of polyoxyethylene lauryl ether sulfuric acid ester.
(13) The use described in any of (10)-(12), wherein polymerization degree of polyoxyethylene moiety of the anionic surface active agent of polyoxyethylene is 3-30.
(14) The use described in (1), wherein the polyhydric alcohol is at least one of an alkylene glycol, a trihydric alcohol, a dialkylene glycol and a polyalkylene glycol; preferably at least one of a trihydric alcohol, a dialkylene glycol and a polyalkylene glycol; and more preferably at least one of glycerin and a diethylene glycol.
   The use of the invention can be materialized by providing
(15) An agricultural chemical composition, comprising an agricultural chemical active ingredient, Cyazofamid, and at least one stabilizer selected from epoxidized animal oil; epoxidized vegetable oil, a nonionic or anionic polyoxyethylene surfactant, a polyhydric alcohol; hydroxides, carbonates and bicarbonates of alkali metals; hydroxides, carbonates and bicarbonates of alkaline earth metals; aqueous silicate solutions; basic silicates; and alkaline earth metal basic silicate.
   Preferred embodiments of such agricultural chemical compositions are as follows.
(16) The composition described in (15), which is a solid formulation.
(17) The composition described in (15), which is a wettable powder, a water dispersible granule or a dustable powder, and preferably a dustable or wettable powder.
(18) The composition described in (15), wherein the stabilizer is epoxidized animal oil and/or epoxidized vegetable oil.
(19) The composition described in (15), wherein the nonionic surface active agent of polyoxyethylene is at least one of polyoxyethylene alkyl ether, polyoxyethylene fatty acid ester and polyoxyethylene castor oil.
(20) The composition described in (15), wherein the anionic surface active agent of polyoxyethylene is at least one of a salt of polyoxyethylene alkyl ether sulfuric acid ester, polyoxyethylene alkylaryl ether sulfate, polyoxyethylene styryl ether sulfate, polyoxyethylene styryl ether ammonium sulfate, polyoxyethylene alkyl ether phosphate, a salt of polyoxyethylene alkylaryl ether phosphoric acid ester, polyoxyethylene styrylaryl ether phosphoric acid ester and a salt of polyoxyethylene styrylaryl ether phosphoric acid ester.
(21) The composition described in (15), wherein the polyhydric alcohol is at least one selected from the group consisting of an alkylene glycol, a trihydric alcohol, a dialkylene glycol and a polyalkylene glycol.
(22) The composition described in any of (15)-(21), which comprises other agricultural chemical active ingredient, in addition to Cyazofamid.
(23) The composition described in (22), wherein the other agricultural chemical active ingredient is an active ingredient compound of a fungicide.
(24) The composition described in (23), wherein the active ingredient compound of a fungicide is a benzanilide compound or an antibiotic.
(25) The composition described in (23), wherein the active ingredient compound of a fungicide is a benzanilide compound.
(26) The composition described in (23), wherein the active ingredient compound of a fungicide is an antibiotic.

### Examples

### Example 1

After 50.0 wt.-% of MK clay (manufactured by Keiwa Rozai Co., Ltd.) and 1.6 wt.-% of a finely-milled Cyazofamid Technical (purity 94.4%, average particle diameter 2.32 µm) were weighed, they were blended using Millser. Further, 47.4 wt.-% of the above-mentioned MK clay and 1.0 wt.-% of a stabilizer were added thereto and again blended using Millser, thereby obtaining a dustable powder containing 1.5 wt.-% of Cyazofamid.

### Example 2

After 21.2 wt.-% of finely-milled Cyazofamid Technical (purity 94.4%, average particle diameter 2.32 µm), 8 wt.-% of a dispersing agent; a sodium alkylnaphthalenesulfonic acid-formaldehyde condensate (trade name: Supragil MNS/90), 2 wt.-% of a wetting agent; sodium dialkylnaphthalene sulfonate (trade name: Supragil WP) and 68.8 wt.-% of calcium carbonate LW-3000 (manufactured by Shimizu Industrial Corporation) are weighed, they are blended using Millser, thereby obtaining a wettable powder containing 20 wt.-% of Cyazofamid.

### Comparative Example

After 50.0 wt.-% of MK clay (manufactured by Keiwa Rozai Co., Ltd.) and 1.6 wt.-% of a finely-milled Cyazofamid Technical (purity 94.4%, average particle diameter 2.32 µm) were weighed, they were blended using Millser. Further, 48.4 wt.-% of the above-mentioned MK clay was added thereto and again blended using Millser, thereby obtaining a dustable powder containing 1.5 wt.-% of Cyazofamid.

### Test Example

The dustable powder obtained by Example 1 or Comparative Example was subjected to an accelerated preservation at 54°C for 14 days, and then the Cyazofamid content in the dustable powder was measured by an HPLC (high performance liquid chromatography) and degradation ratio (%) of Cyazofamid was calculated by the formula degradation ratio (%) = (initial stage content - content after accelerated preservation)/initial stage content x 100. The test results are shown in Table 1. In this connection, the Cyazofamid content in the dustable powder preserved at 4°C was measured at the time of measuring the Cyazofamid content in the dustable powder after accelerated preservation, and the value was used as the initial stage content.

| Table 1 (Degradation ratio of Cyazofamid) | | |
|---|---|---|
| | Stabilizer (1.0 wt.-%) | Degradation Ratio (%) |
| Example | Epoxidized Soybean Oil (trade name: NK 800: manufactured by TAKEMOTO OIL & FAT Co., Ltd.) | 5 |
| | Polyoxyethylene Lauryl Ether (trade name: Noigen ET-143: manufactured by Dai-ichi Kogyo Seiyaku Co., Ltd.) | 6 |
| | Polyoxyethylene Oleate Ester (trade name: Noigen ES-149: manufactured by Dai-ichi Kogyo Seiyaku Co., Ltd.) | 5 |
| | Polyoxyethylene Castor Oil (trade name: Sorpol CA20: manufactured by TOHO Chemical Industry Co., Ltd.) | 7 |
| | Ammonium Salt of Polyoxyethylene Lauryl Ether Sulfuric Acid Ester (trade name: Hitenol LA-12: manufactured by Dai-ichi Kogyo Seiyaku Co., Ltd.) | 4 |
| | Glycerin | 3 |
| | Diethylene Glycol | 9 |
| | 10% of Aqueous Sodium Carbonate Solution | 1 |
| Comparative Example | None | 84 |

### Industrial Applicability

According to the method of the invention, the storage stability of an agricultural chemical composition comprising an agricultural chemical active ingredient, Cyazofamid, can be improved, and an agricultural composition in which Cyazofamid is chemically stabilized can be provided.

## Claims

1. The use of at least one stabilizer selected from epoxidized animal oil; epoxidized vegetable oil; a nonionic or anionic polyoxyethylene surfactant; a polyhydric alcohol; hydroxides, carbonates and bicarbonates of alkali metals; hydroxides, carbonates and bicarbonates of alkaline earth metals; aqueous silicate solutions; basic silicates; and alkaline earth metal basic silicate,
for controlling degradation of Cyazofamid.

2. The use of claim 1, wherein the degradation of Cyazofamid is controlled in a solid formulation

3. The use of claim 2, wherein the solid formulation is a wettable powder, a water dispersible granule or a dustable powder.

4. The use of claim 1, wherein the weight ratio of Cyazofamid and the stabilizer is 1:100 to 100:1.

## Patentansprüche

1. Verwendung von mindestens einem Stabilisator, ausgewählt aus epoxidiertem tierischen Öl, epoxidiertem pflanzlichen Öl, einem nicht-ionischen oder anionischen Polyoxyethylen-Tensid, einem mehrwertigen Alkohol, Alkalimetallhydroxiden, -carbonaten und -bicarbonaten, Erdalkalimetallhydroxiden, -carbonaten und -bicarbonaten, wässrigen Silikatlösungen, basischen Silikaten und basischen Erdalkalimetallsilikaten,
zur Kontrolle des Abbaus von Cyazofamid.

2. Verwendung gemäß Anspruch 1, wobei der Abbau von Cyazofamid in einer festen Formulierung kontrolliert wird.

3. Verwendung gemäß Anspruch 2, wobei die feste Formulierung ein benetzbares Pulver, ein wasserdispergierbares Granulat oder ein verstäubbares Pulver ist.

4. Verwendung gemäß Anspruch 1, wobei das Gewichtsverhältnis von Cyazofamid zu dem Stabilisator 1:100 bis 100:1 beträgt.

## Revendications

1. Utilisation d'au moins un stabilisant choisi parmi une huile animale époxydée ; une huile végétale époxydée ; un tensioactif de polyoxyéthylène non ionique ou anionique ; un alcool polyvalent ; des hydroxydes, des carbonates et des bicarbonates de métaux alcalins ; des hydroxydes, des carbonates et des bicarbonates de métaux alcalino-terreux ; des solutions aqueuses de silicate ; des silicates basiques ; et un silicate basique de métal alcalino-terreux,
pour contrôler la dégradation de cyazofamide.

2. Utilisation selon la revendication 1, dans laquelle la dégradation de cyazofamide est contrôlée dans une formulation solide.

3. Utilisation selon la revendication 2, dans laquelle la formulation solide est une poudre mouillable, un granulé dispersible dans l'eau ou une poudre saupoudrable.

4. Utilisation selon la revendication 1, dans laquelle le rapport massique de cyazofamide et du stabilisant est de 1:100 à 100:1.
